# EUROPÄISCHE PATENTSCHRIFT

(11) **EP 2 251 660 B1**
(45) Veröffentlichungstag und Bekanntmachung des Hinweises auf die Patenterteilung: **27.07.2016**
(21) Anmeldenummer: 09160255.7
(22) Anmeldetag: 14.05.2009
(51) Int. Cl.: G01K 1/16, G01K 13/00

(54) **Doppeltemperatursensor**
Double temperature sensor
Double capteur de température

(43) Veröffentlichungstag der Anmeldung: 17.11.2010
(73) Patentinhaber: Drägerwerk AG & Co. KGaA, 23558 Lübeck (DE)
(72) Erfinder: Grassl, Thomas, 23560, Lübeck (DE); Koch, Jochim, 23909, Ratzeburg (DE); Ventur, Marco, 23564, Lübeck (DE); Sattler, Frank, 23560, Lübeck (DE)

(56) Entgegenhaltungen:
- EP-A- 0 399 061
- EP-A1- 1 774 902
- WO-A-2008/078271
- DE-A1- 10 038 247
- US-A1- 2003 032 893
- US-A1- 2003 069 714
- US-A1- 2005 021 564
- US-A1- 2005 043 631
- US-A1- 2005 276 309
- US-A1- 2008 214 949

## Beschreibung

Die Erfindung betrifft einen Doppeltemperatursensor zur Bestimmung der Körperkerntemperatur. Doppeltemperatursensoren werden in bekannter Weise zur Messung von einer oberflächennahen Temperatur der Umgebungsluft und der Hautoberfläche verwendet.
Aus der DE 100 38 247 C1 ist ein Doppeltemperatursensor bekannt geworden, mit zwei in einem einstückig als Gehäuse ausgebildeten Wärmeflussisolierungsblock angeordneten Temperatursensoren mit jeweils zugehörigen elektrischen Verbindungen. Die Temperatursensorelemente sind in dem Wärmeflussisolierungsblock im Wesentlichen parallel zueinander und von der Außenfläche des Wärmeflussisolierungsblocks beabstandet angeordnet, wobei der Abstand durch eine Schicht des Isolationsmaterials gebildet ist.

Doppeltemperatursensoren kommen beispielsweise in Atemschutzprodukten bei der Erfassung und Überwachung der Körpertemperatur zum Einsatz, um Rückschlüsse auf den physiologischen Allgemeinzustand des Trägers der Atemschutzprodukte treffen zu können. Zur Befestigung der Doppeltemperatursensoren kann für diese Anwendung eine Kopfbänderung zum Einsatz kommen, wie sie beispielsweise in der DE 101 39 705 A1 beschrieben wird. Ein Bänderungselement liegt dabei an der Kopfhaut eines Kopfbandträgers an und dient zur Aufnahme eines die Hauttemperatur messenden Temperatursensors.

Ferner finden Doppeltemperatursensoren in der Medizintechnik Anwendung, insbesondere zur Messung der Körpertemperatur von Neugeborenen. Auch hier ist es wünschenswert eine einfache Anbringung der Doppeltemperatursensoren an den Neugeborenen zu ermöglichen.

Die US 2003/0069714 A1 beschreibt einen pflasterartig aufgebauten Doppeltemperatursensor, der einerseits über einen Temperatursensor zur Erfassung einer Hautoberflächentemperatur und andererseits über einen Temperatursensor zur Erfassung der Umgebungstemperatur verfügt. Mithilfe eines als Halteelement vorgesehenen Pflasters wird ein derartiger Doppeltemperatursensor am Finger oder am Zeh eines Patienten befestigt. Der beschriebene Sensor wird bei Patienten mit Raynaud-Syndrom Einsatz eingesetzt. Derartige Patienten haben das Problem, dass vor allem ihre äußeren Gliedmaßen im Akutfall nur unzureichend durchblutet werden, es zu Auskühlungserscheinungen in diesem Bereich kommt und insbesondere die Finger oder Zehen eine weiße Farbe annehmen. Um derartigen Akuterscheinungen vorzubeugen, ist es wichtig, dass die Patienten die Temperatur in der Umgebung ihrer Gliedmaßen nach Möglichkeit konstant halten oder während eines Akutfalls für eine zusätzliche Erwärmung sorgen. Wesentlich für die Behandlung des Raynaud-Syndroms ist die Erfassung der Hauttemperatur, um im Bedarfsfall von außen Wärme zuführen zu können und so die Schmerzen des Patienten im Akutfall zu lindern.

Ferner ist aus der WO 2008/078271 A1 ein Doppeltemperatursensor bekannt, bei dem die thermische Leitfähigkeit zwischen den beiden Temperatursensoren gezielt verstellbar ist. Hierzu ist insbesondere der Abstand zwischen den beiden Temperatursensoren veränderbar. Um einen verbesserten Kontakt zwischen der Hautoberfläche und dem auf der Hautoberfläche aufliegenden Temperatursensor zu erreichen, ist ein Federelement vorgesehen, das vor allem Unebenheiten der Haut ausgleichen soll. Als Federelement wird eine Neoprenmembran verwendet, auf der einerseits der Hauttemperatursensor und auf der gegenüberliegenden Oberfläche der Umgebungstemperatursensor fixiert sind. Die Membran wiederum ist an ihren äußeren Enden an einer Haltestruktur befestigt, so dass die Membran gezielt in Richtung der Hautoberfläche gewölbt werden kann, wodurch der Hautsensor gegen die Hautoberfläche gedrückt wird.

Die US 2008/0214949 A1 beschreibt einen Doppeltemperatursensor, der mithilfe eines Pflasters auf der Hautoberfläche eines Säuglings fixierbar ist. Die Verwendung eines Pflasterstreifens soll den Vorteil haben, dass dieser flexibel ist und eine bevorzugte Befestigung des Sensors auf der Hautoberfläche ermöglicht.

Der EP 0 399 061 A1 ist im Weiteren ein Sensor für eine ZHF-Temperaturmessung zu entnehmen. Die beschriebene Vorrichtung zur ZHF-Temperaturmessung zeichnet sich dadurch aus, dass einerseits ein mit der Haut in Kontakt befindlicher Temperatursensor und andererseits ein Heizelement, mit dem ein Hautbereich im Bereich des Temperatursensors erwärmbar ist, vorgesehen sind. Die Regelung des Heizelementes erfolgt in Abhängigkeit der mit dem Hauttemperatursensor erfassten Temperatur. Die beschriebene Vorrichtung umfasst somit zwei Temperatursensoren, von denen einer eine Haut- und der andere eine Heizelementtemperatur erfasst.

Aus der US 2005/0276309 A1 geht ein Brustgürtel hervor, wie er insbesondere im Fitnessbereich eingesetzt wird. Ein derartiger Brustgürtel verfügt im Wesentlichen über zwei seitlich des Brustbeins angeordnete Sensoren zur Erfassung des Pulses. Zwischen diesen beiden Sensoren ist ein Doppeltemperatursensor vorgesehen, mit dem die Kerntemperatur eines Athleten ermittelt werden soll. Wesentlich für den beschriebenen Brustgurt ist, dass dieser grundsätzlich mehrfach angelegt werden kann, ohne dass hierfür ein Pflaster bzw. eine Verklebung auf der Haut notwendig ist

Weiterhin enthält die US 2003/0032893 A1 den Gedanken, einen Doppeltemperatursensor mithilfe eines elastischen Bandes am Körper eines Menschen, hier am Kopf, zu befestigen.

In der Praxis hat sich ferner herausgestellt, dass es wünschenswert ist, wenn die Doppeltemperatursensoren zur einmaligen Benutzung ausgeführt sind. Insbesondere im Bereich der Medizintechnik steht aufgrund einer Verhinderung einer Keimübertragung eine einmalige Nutzung der Sensoren im Vordergrund.

Demnach besteht die Aufgabe der Erfindung in der Bereitstellung eines kostengünstigen und einmal zu verwendenden Doppeltemperatursensors, der in einfacher Weise auf der Oberfläche des Körpers einer Person angebracht werden kann.

Diese Aufgabe wird durch einen Doppeltemperatursensor zur Bestimmung der Körperkerntemperatur mit den Merkmalen des unabhängigen Anspruchs 1 gelöst.

Die abhängigen Ansprüche geben vorteilhafte Ausbildungen des erfindungsgemäßen Doppeltemperatursensors nach Anspruch 1 an.

Die erfindungsgemäße Vorrichtung umfasst dabei wenigstens ein erstes Temperatursensorelement zur Messung einer Oberflächen nahen Temperatur der Umgebungsluft, ein zweites Temperatursensorelement zur Messung einer Temperatur der Hautoberfläche, wobei das erste und das zweite Temperatursensorelement in einem Sensorblock angeordnet sind, ein den Sensorblock wenigstens teilweise umgebendes Haltelement, eine Klebeschicht zur Fixierung des Halteelementes auf der Hautoberfläche und ein auf den Sensorblock wirkendes Federelement, dessen Federkraft in Richtung der Hautoberfläche gerichtet ist. Erfindungsgemäß ist weiter vorgesehen, dass das Halteelement mit einem Wärmeisolationselement, das den Sensorblock vor seitlichen Wärmeverlusten schützt, eine Einheit bildet, in die der Sensorblock integriert und fixiert ist und das Federelement in dem Wärmeisolationselement integriert ist, wobei das Federelement als ein elastisches Material oder eine mechanische Feder ausgeführt ist und dass wenigstens zwei Anschlusskabel zur Verbindung der Temperatursensorelemente mit einer Auswerteeinheit derart vorgesehen sind, dass eines der Anschlusskabel eine der Hauttemperatur nahezu entsprechende Temperatur erreicht.

Ein wesentlicher Vorteil der vorliegenden Erfindung besteht in einer optimalen Anpassung des Doppeltemperatursensors an Krümmungen der Hautoberfläche aufgrund des erfindungsgemäßen Aufbaus, wodurch in der Praxis eine bessere Handhabung und insbesondere eine genauere Messsignalübertragung folgen. Insbesondere kann mit dem auf den Sensorblock wirkenden Federelement der Sensorblock besser auf der Haut adaptiert werden. In vorteilhafter Weise wird dadurch eine Mindestandruckkraft des Sensorblocks auf der Haut für einen besseren thermischen Kontakt zur Haut und damit einer genaueren Erfassung der Temperatur erzielt. Das Federelement wird in dem Halteelement integriert. In vorteilhafter Weise ist das Federelement als ein elastisches Material ausgeführt, beispielsweise aus Schaumstoff. Das elastische Material ist vorgesehen, den Sensorblock auf die Haut zu drücken. Studien haben ergeben, dass der Sensor dadurch individuell an die gekrümmte Hautoberfläche einer Person, beispielsweise an die Stirn, angepasst werden kann. Die Oberfläche kann eben, konvex oder konkav sein. Vorzugsweise weist das Federelement eine Federkraft von ca. zwei Newton auf.

Das Wärmeisolationselement ist vorzugsweise zylindrisch ausgebildet und besteht aus Schaumstoff. Das Wärmeisolationselement schützt den Sensorblock vor seitlichen Wärmeverlusten.

Der erfindungsgemäße Doppeltemperatursensor ist mit wenigstens zwei Anschlusskabeln zur Verbindung der Temperatursensorelemente mit einer Auswerteeinheit ausgeführt, wobei vorzugsweise ein erstes Anschlusskabel zwischen einer Schaumstoffschicht und einer Gelschicht des Klebeelementes und ein zweites Anschlusskabel auf der Schaumstoffschicht angeordnet ist. Damit kann das Anschlusskabel eine der Hauttemperatur nahezu entsprechende Temperatur erreichen. Wärmeverluste durch das Anschlusskabel können somit minimiert werden. Die wenigstens zwei Anschlusskabel können, spiral-, kreis-, mäander-, zickzack-, sternförmig oder in Form eines Polygons in dem Wärmeisolationselement angeordnet sein.

In einer besonders vorteilhaften Ausführung des Doppeltemperatursensors ist ein Druckschalter in einem zu der Hautoberfläche gerichteten Bereich des Sensors vorgesehen, der vorzugsweise in den Sensorblock integriert ist. Bei Verwendung des erfindungsgemäßen Doppeltemperatursensors für die Messung der Hauttemperatur einer Person und der Umgebungslufttemperatur kann der Doppeltemperatursensor durch einen Hautkontakt ein- und ausgeschaltet werden.

Die vorliegende Erfindung wird mit Bezug auf die beigefügten Zeichnungen detaillierter erläutert, wobei gleiche Bezugszeichen gleiche Figuren bezeichnen.

In der Zeichnung gilt:
Figur 1 ist eine schematische Darstellung eines ersten beispielhaften Doppeltemperatursensors mit einem zwischen dem Halteelement und dem Sensorblock angeordneten Federelement, wobei das Beispiel nicht Teil der Erfindung ist,
Figur 2 ist eine schematische Darstellung eines zweiten beispielhaften Doppeltemperatursensors mit in dem Halteelement integrierten Federelementen, wobei das Beispiel nicht Teil der Erfindung ist,
Figur 3 ist eine schematische Darstellung eines dritten beispielhaften Doppeltemperatursensors mit einem Wärmeisolationselement, wobei das Beispiel nicht Teil der Erfindung ist,
Figur 4 ist eine schematische Darstellung des erfindungsgemäßen Doppeltemperatursensors.

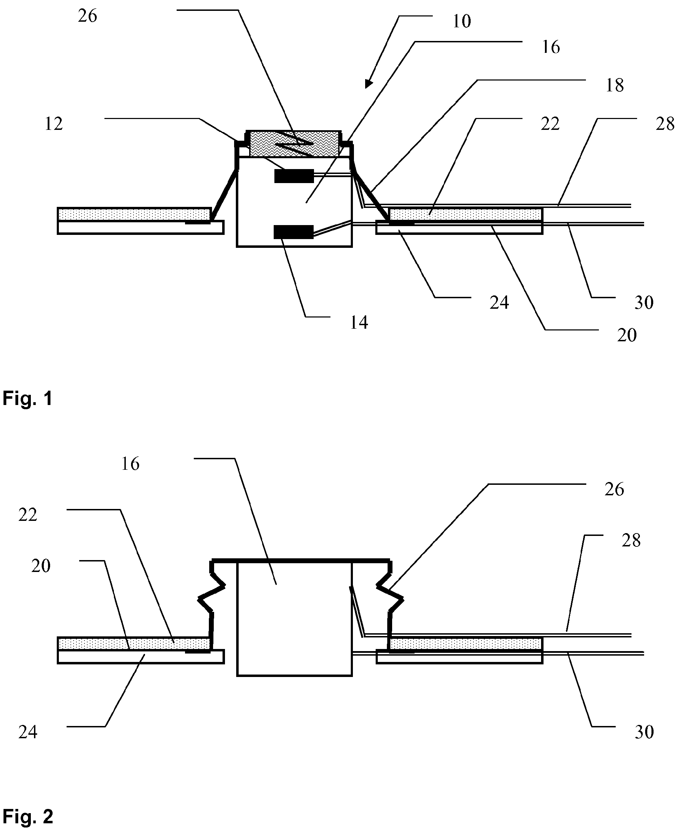

In Figur 1 ist ein Beispiel eines Doppeltemperatursensors, beispielsweise für die Anwendung zur Bestimmung der Körperkerntemperatur eines Neugeborenen dargestellt. Der Doppeltemperatursensor 10 weist einen als Gehäuse ausgeformten Sensorblock 16 auf. In dem Sensorblock 16 befindet sich ein erstes Temperatursensorelement 12 und ein zweites Temperatursensorelement 14. Das Sensorelement 16 wird mit einem Halteelement 18 fixiert, wobei das Halteelement 18 den Sensorblock 16 an der der Hautoberfläche abgewandten Seite umhüllt. Zwischen dem Halteelement 18 und dem Sensorblock 16 ist ein Federelement 26 angeordnet. Das Federelement 26 besteht aus einem elastischen Material, vorzugsweise aus Schaumstoff. Alternativ zu dem elastischen Material kann auch eine mechanische Feder vorgesehen sein. Das Halteelement 18 kann in einer nicht dargestellten Ausführungsform Schnappelemente aufweisen, die ein Einschnappen und damit Fixieren des Sensorblocks 16 innerhalb des Halteelementes 18 ermöglichen.

Ferner ist ein Klebeelement 20 vorgesehen, welches ein Anbringen des Halteelementes 18 mit dem Federelement 26 und dem Sensorblock 16 auf der Hautoberfläche ermöglicht. Das Klebeelement 20 ist aus einer Schaumstoffschicht 22 und einer Gelschicht 24 aufgebaut. Die Gelschicht 24 dient der Verbindung des Klebeelementes 20 mit der Hautoberfläche. In vorteilhafter Weise ist das Federelement 26 so ausgelegt, dass eine Andruckkraft von mindestens zwei Newton des Sensorblocks 16 auf die Hautoberfläche erreicht wird. Somit sind ein guter Hautkontakt und eine stabile thermische Verbindung des Sensorblocks 16 mit der Hautoberfläche gewährleistet. Das Federelement 26 wirkt dabei auf den Sensorblock 16, wobei die Federkraft des Federelementes 26 in Richtung der Hautoberfläche gerichtet ist. Der Sensorblock 16, das Halteelement 18 und das Klebeelement 20 sind zueinander koaxialförmig angeordnet. Die Temperatursensorelemente 12 und 14 sind dabei im rechten Winkel zur mittigen Achse innerhalb des Sensorblocks 16 ausgerichtet. Damit stehen sowohl das erste Temperatursensorelement 12 als auch das zweite Temperatursensorelement 14 parallel zur Hautoberfläche. Alternativ hierzu können das erste Temperatursensorelement 12 und das zweite Temperatursensorelement 14 seitlich versetzt in dem Sensorblock 16 angeordnet sein.

Das Klebeelement 20 ist in vorteilhafter Weise mit einer Gelschicht 24 versehen, welche eine optimale Verbindung mit einer rauen Hautoberfläche ermöglicht. Für eine erste Positionierung und eine eventuelle Präpositionierung kann ein Halteelement 18 mit einer Gelschicht 24 mehrfach benutzt werden. Doppeltemperatursensoren mit Halteelementen 18 bestehend aus einer Gelschicht 24 sind hautfreundlich und hinterlassen bei Ablösung der Halteelemente keine Hautspuren auf der Gelschicht, wodurch eine Gefahr einer Hautirritation vermieden bzw. reduziert werden kann. Alternativ hierzu kann das Halteelement 18 auch mit einer Klebeschicht ausgeführt sein.

Zur Verbindung der beiden Temperatursensorelemente 12 und 14 sind wenigstens zwei Anschlusskabel 28 und 30 vorgesehen. Die Anschlusskabel 28 und 30 dienen der Verbindung des Doppeltemperatursensors mit einer Auswerteeinheit. Dabei ist ein erstes Anschlusskabel 28 in vorteilhafter Weise zwischen der Schaumstoffschicht 22 und der Gelschicht 24 vorgesehen. Ein zweites Anschlusskabel 30 ist auf der Schaumstoffschicht 22 angeordnet.

In einer weiteren Ausgestaltung des Doppeltemperatursensors 10, dargestellt in der Fig. 2, ist das Federelement 26 in das Halteelement 18 integrierten. Es sind in dieser Ausführung zwei Federelemente 26 in den Halteelement 18 vorgesehen. Alternativ hierzu können auch mehrere oder auch nur ein beilspielsweise ringförmiges Federelement 26 in dem Halteelement vorgesehen sein.

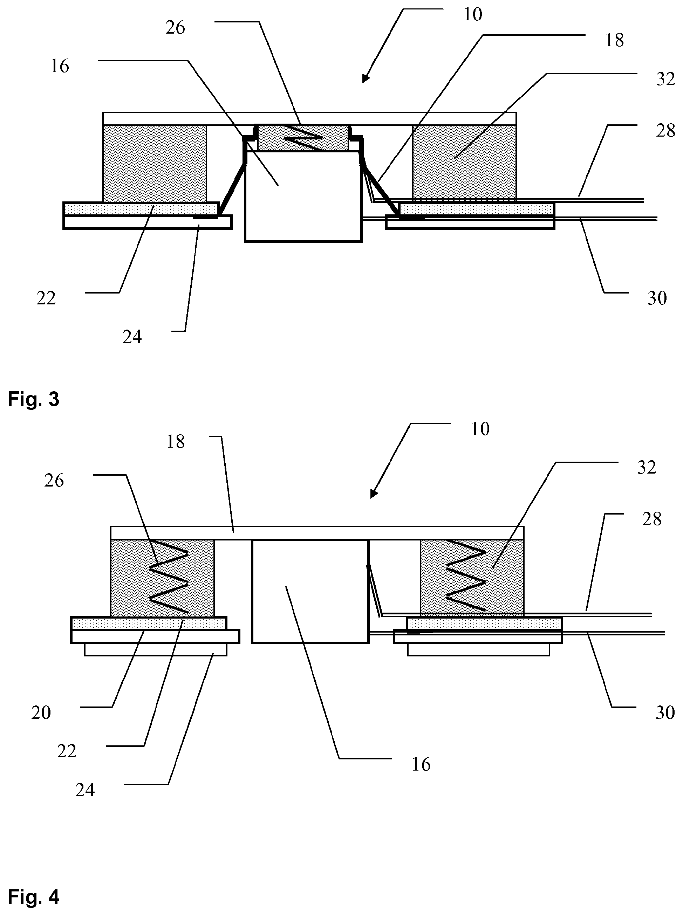

In der in Figur 3 dargestellten Variante ist zusätzlich ein Wärmeisolationselement 32 vorgesehen, welches koaxialförmig das Halteelement 18 umgibt. Diese Form eignet sich besonders für die Bestimmung der Kerntemperatur an Erwachsenen zur besseren Isolierung von weiteren thermischen Einflüssen. Vorzugsweise ist das Isolationsmaterial des Wärmeisolationselementes 32 aus Schaumstoff ausgebildet. Das Wärmeisolationselement 32 wird an der Oberseite von einem Element bestehend vorzugsweise aus einer aus Aluminium beschichteten Folie, mit einem hohen Reflexionsgrad im infraroten Strahlungsbereich, nachstehend als Reflektorpad bezeichnet, gehalten. Das Reflektorpad kann mit dem Wärmeisolationselement 32 mittels eines Klebeverfahrens verbunden werden. Zusätzlich kann die Verbindung zwischen dem Reflektorpad und dem Halteelement 18 mittels eines Klebeverfahrens erfolgen. Das Wärmeisolationselement 32 ist aus einem elastischen Material ausgeführt, so dass in vorteilhafter Weise Toleranzen aufgrund von Krümmungen der Hautoberfläche flexibel im Hinblick auf eine stabile Befestigung des Doppeltemperatursensors ausgeglichen werden können. Der erfindungsgemäße Doppeltemperatursensor kann sich somit gut an die Kontur der Hautoberfläche anpassen.

Eine Anordnung des ersten Anschlusskabels 28 und des zweiten Anschlusskabels 30 kann analog der in der Figur 1 dargestellten und beschriebenen Variante erfolgen. Ferner kann eine zusätzliche Wärmeisolierung des ersten und zweiten Anschlusskabels 28 und 30 zur Hautoberfläche vorgesehen sein. Im Bereich des Sensorblocks 16 kann das erste und zweite Anschlusskabel 28 und 30 eine zusätzliche Isolierung aufweisen, wobei in vorteilhafter Weise der Durchmesser des ersten und zweiten Anschlusskables 28 und 30 im Bereich des Sensorblocks 16 größer ausgeführt ist. In diesem vergrößerten Bereich kann die Kabelführung beispielsweise spiral-, mäanderförmig sein, um somit die an der Hautoberfläche liegenden Kabellänge zu vergrößern. Damit kann eine Temperaturdifferenz zwischen dem Sensorblock 16 und dem ersten und zweiten Anschlusskabeln 28 und 30 verringert werden.

In einer weiteren, nicht dargestellten Ausführungsvariante kann das erste und zweite Anschlusskabel 28 und 30, spiral-, kreis-, mäander-, zickzack-, sternförmig oder in Form eines Polygons in dem Wärmeisolationselement 32 angeordnet sein.

In einer Ausführungsvariante der Figur 4 bildet das Halteelement 18 gemäß der Erfindung mit dem Wärmeisolationselement 32 eine Einheit, in die der Sensorblock 16 integriert und fixiert ist. Das Federelement 26 ist in dem Wärmeisolationselement 32 integriert. Die Anordnung des ersten und zweiten Anschlusskabels 28 und 30 erfolgt analog zu den Ausführungen der Figuren 1 bis 3.

Generell kann in dem Sensorblock 16 das erste und zweite Temperatursensorelement 12 und 14 jeweils als digitales Bauteil ausgeführt sein, welches mit einer Auswerteelektronik und einer elektrischen Versorgung versehen ist und ferner eine drahtlose Datenübertragung der Temperaturmesswerte an eine Auswerteeinheit ermöglicht. In dieser Ausführung sind keine Anschlusskabel erforderlich.

Ein Aus- und Einschalten des erfindungsgemäßen Doppeltemperatursensors 10 kann mittels eines Druckschalters erfolgen, der vorzugsweise in dem Sensorblock 16 integriert ist (nicht dargestellt).

In einer weiteren Ausführung kann ein Speicherelement vorzugsweise in dem Sensorblock 16 des Doppeltemperatursensors 10 vorgesehen sein, in dem beispielsweise die Kennlinie des ersten Temperatursensorelementes 12 und des zweiten Temperatursensorelementes 14 speicherbar ist (nicht dargestellt).

In den beschriebenen Varianten der Figuren 1 bis 4 ist der Doppeltemperatursensor zylindrisch ausgeführt. Alternativ dazu kann die Oberfläche des erfindungsgemäßen Doppeltemperatursensor auch gewölbt ausgeführt sein.

Während die vorliegende Erfindung unter Bezugnahme auf das bevorzugte Ausführungsbeispiel beschrieben worden ist, sind dem Fachmann verschiedene Änderungen und Modifikationen klar, die in den Schutzbereich der angeführten Ansprüche fallen sollen.

### BEZUGSZEICHENLISTE

- 10: Doppeltemperatursensor
- 12: erstes Temperatursensorelement
- 14: zweites Temperatursensorelement
- 16: Sensorblock
- 18: Halteelement
- 20: Klebeelement
- 22: Schaumstoffschicht
- 24: Gelschicht
- 26: Federelement
- 28: erstes Anschlusskabel
- 30: zweites Anschlusskabel
- 32: Wärmeisolationselement

## Patentansprüche

1. Doppeltemperatursensor zur Bestimmung der Körperkerntemperatur, umfassend wenigstens:
ein erstes Temperatursensorelement (12) zur Messung einer Oberflächen - nahen Temperatur der Umgebungsluft,
- ein zweites Temperatursensorelement (14) zur Messung einer Temperatur der Hautoberfläche,
- wobei das erste und das zweite Temperatursensorelement (12, 14) in einem Sensorblock (16) angeordnet sind,
- ein den Sensorblock (16) wenigstens teilweise umgebendes Halteelement (18), das eine Klebeschicht zur Fixierung des Halteelementes (18) auf der Hautoberfläche aufweist und
- ein auf den Sensorblock (16) wirkendes Federelement (26), dessen Federkraft in Richtung der Hautoberfläche gerichtet ist **dadurch gekennzeichnet, dass** das Halteelement (18) mit einem Wärmeisolationselement (32), das den Sensorblock (16) vor seitlichen Wärmeverlusten schützt, eine Einheit bildet, in die der Sensorblock (16) integriert und fixiert ist und das Federelement (26) in dem Wärmeisolationselement (32) integriert ist, wobei das Federelement (26) als ein elastisches Material oder eine mechanische Feder ausgeführt ist und dass wenigstens zwei Anschlusskabel (28, 30) zur Verbindung der Temperatursensorelemente (12, 14) mit einer Auswerteeinheit derart vorgesehen sind, dass eines der Anschlusskabel eine der Hauttemperatur nahezu entsprechende Temperatur erreicht.

2. Doppeltemperatursensor nach einem der vorhergehenden Ansprüche **dadurch gekennzeichnet, dass** das Federelement (26) als ein elastisches Material vorzugsweise Schaumstoff oder eine mechanische Feder ausgeführt ist.

3. Doppeltemperatursensor nach einem der vorhergehenden Ansprüche **dadurch gekennzeichnet, dass** der Sensorblock (16), das Halteelement (18) und das Klebeelement (20) zueinander koaxialförmig angeordnet sind, wobei die Temperatursensorelemente (12, 14) vorzugsweise in der mittigen Achse des Sensorblockes (16) angeordnet sind.

4. Doppeltemperatursensor nach einem der vorhergehenden Ansprüche **dadurch gekennzeichnet, dass** das Klebeelement (20) mit einer Schaumstoffschicht (22) und einer Gelschicht (24) ausgeführt ist.

5. Doppeltemperatursensor nach einem der vorhergehenden Ansprüche **dadurch gekennzeichnet, dass** ein erstes Anschlusskabel (28) zwischen der Schaumstoffschicht (22) und der Gelschicht (24) und ein zweites Anschlusskabel (30) auf der Schaumstoffschicht (22) angeordnet ist.

6. Doppeltemperatursensor nach Anspruch 5, **dadurch gekennzeichnet, dass** die wenigstens zwei Anschlusskabel (28, 30) koaxial den Sensorblock (16) umgeben.

7. Doppeltemperatursensor nach einem der vorhergehenden Ansprüche **dadurch gekennzeichnet, dass** zwischen dem Halteelement (18) und dem Sensorblock (16) wenigstens ein Lufteinschluss vorgesehen ist.

8. Doppeltemperatursensor nach einem der vorhergehenden Ansprüche **dadurch gekennzeichnet, dass** das Wärmeisolationselement (32) vorzugsweise aus Schaumstoff, koaxialförmig das Halteelement umgibt.

9. Doppeltemperatursensor nach Anspruch 8, **dadurch gekennzeichnet, dass** das Wärmeisolationselement (32) zylindrisch ausgebildet ist.

10. Doppeltemperatursensor nach Anspruch 8, **dadurch gekennzeichnet, dass** die wenigstens zwei Anschlusskabel (28, 30) spiral-, kreis-, mäander-, zickzack-, sternförmig oder in Form eines Polygons in dem Wärmeisolationselement (32) angeordnet sind.

11. Doppeltemperatursensor nach einem der vorhergehenden Ansprüche **dadurch gekennzeichnet, dass** ein Druckschalter in einem zu der Hautoberfläche gerichteten Bereich des Sensorsblackes (16) vorgesehen ist.

## Claims

1. A double temperature sensor for determining core body temperature, comprising at least:
- a first temperature sensor element (12) for measuring a near-surface temperature of the ambient air,
- a second temperature sensor element (14) for measuring a temperature of the skin surface,
- wherein the first and the second temperature sensor element (12, 14) are arranged in a sensor block (16),
- a holding element (18) which at least partially surrounds the sensor block (16) and has an adhesive layer for fixing the holding element (18) on the skin surface, and
- a spring element (26) which acts on the sensor block (16) and whose spring force is directed in the direction of the skin surface,
**characterised in that** with a heat-insulating element (32), which protects the sensor block (16) from lateral heat losses, the holding element (18) forms a unit into which the sensor block (16) is integrated and fixed, and the spring element (26) is integrated in the heat-insulating element (32), wherein the spring element (26) is realized as an elastic material or a mechanical spring, and **in that** at least two connection cables (28, 30) are provided to connect the temperature sensor elements (12, 14) to an evaluating unit in such a way that one of the connection cables reaches a temperature that almost corresponds to the skin temperature.

2. A double temperature sensor according to one of the preceding claims, **characterised in that** the spring element (26) is realized as an elastic material, preferably a foam material, or a mechanical spring.

3. A double temperature sensor according to one of the preceding claims, **characterised in that** the sensor block (16), the holding element (18) and the adhesive element (20) are arranged coaxially with respect to each other, wherein the temperature sensor elements (12, 14) are preferably arranged along the central axis of the sensor block (16).

4. A double temperature sensor according to one of the preceding claims, **characterised in that** the adhesive element (20) is realized with a layer of foam material (22) and a layer of gel (24).

5. A double temperature sensor according to one of the preceding claims, **characterised in that** a first connection cable (28) is arranged between the layer of foam material (22) and the layer of gel (24), and a second connection cable (30) is arranged on the layer of foam material (22).

6. A double temperature sensor according to claim 5, **characterised in that** the at least two connection cables (28, 30) coaxially surround the sensor block (16).

7. A double temperature sensor according to one of the preceding claims, **characterised in that** provided between the holding element (18) and the sensor block (16) there is at least one air inclusion.

8. A double temperature sensor according to one of the preceding claims, **characterised in that** the heat-insulating element (32), preferably of foam material, coaxially surrounds the holding element.

9. A double temperature sensor according to claim 8, **characterised in that** the heat-insulating element (32) is formed cylindrically.

10. A double temperature sensor according to claim 8, **characterised in that** the at least two connection cables (28, 30) are arranged in the shape of a spiral, circle, meander, zigzag, star, or in the form of a polygon in the heat-insulating element (32).

11. A double temperature sensor according to one of the preceding claims, **characterised in that** a pressure switch is provided in a region of the sensor block (16) that is directed towards the skin surface.

## Revendications

1. Double capteur de température pour déterminer la température interne du corps, comprenant au moins :
- un premier élément capteur de température (12) pour mesurer une température de l'air ambiant à proximité de la surface,
- un deuxième élément capteur de température (14) pour mesurer une température de la surface de la peau,
- le premier et le deuxième élément capteur de température (12, 14) étant disposés dans un bloc de capteurs (16),
- un élément de maintien (18) entourant le bloc de capteurs (16) au moins partiellement, qui présente une couche adhésive pour fixer l'élément de maintien (18) sur la surface de la peau et
- un élément formant ressort (26) agissant sur le bloc de capteurs (16), dont la force de ressort est orientée en direction de la surface de la peau,
**caractérisé en ce que** l'élément de maintien (18) forme avec un élément d'isolation thermique (32), qui protège le bloc de capteurs (16) contre les déperditions de chaleur latérales, une unité dans laquelle le bloc de capteurs (16) est intégré et fixé et l'élément formant ressort (26) est intégré dans l'élément d'isolation thermique (32), l'élément formant ressort (26) étant réalisé sous la forme d'un matériau élastique ou d'un ressort mécanique, et qu'au moins deux câbles de raccordement (28, 30) sont prévus pour relier les éléments capteurs de température (12, 14) à une unité d'évaluation de telle façon qu'un des câbles de raccordement atteigne une température correspondant à peu près à la température de la peau.

2. Double capteur de température selon l'une des revendications précédentes, **caractérisé en ce que** l'élément formant ressort (26) est réalisé sous la forme d'un matériau élastique, de préférence de mousse, ou d'un ressort mécanique.

3. Double capteur de température selon l'une des revendications précédentes, **caractérisé en ce que** le bloc de capteurs (16), l'élément de maintien (18) et l'élément adhésif (20) sont disposés coaxialement les uns par rapport aux autres, les éléments capteurs de température (12, 14) étant de préférence disposés sur l'axe médian du bloc de capteurs (16).

4. Double capteur de température selon l'une des revendications précédentes, **caractérisé en ce que** l'élément adhésif (20) est réalisé avec une couche de mousse (22) et une couche de gel (24).

5. Double capteur de température selon l'une des revendications précédentes, **caractérisé en ce qu'**un premier câble de raccordement (28) est disposé entre la couche de mousse (22) et la couche de gel (24) et un deuxième câble de raccordement (30) sur la couche de mousse (22).

6. Double capteur de température selon la revendication 5, **caractérisé en ce que** lesdits au moins deux câbles de raccordement (28, 30) entourent coaxialement le bloc de capteurs (16).

7. Double capteur de température selon l'une des revendications précédentes, **caractérisé en ce qu'**au moins une poche d'air est prévue entre l'élément de maintien (18) et le bloc de capteurs (16).

8. Double capteur de température selon l'une des revendications précédentes, **caractérisé en ce que** l'élément d'isolation thermique (32), de préférence en mousse, entoure coaxialement l'élément de maintien.

9. Double capteur de température selon la revendication 8, **caractérisé en ce que** l'élément d'isolation thermique (32) est de forme cylindrique.

10. Double capteur de température selon la revendication 8, **caractérisé en ce que** lesdits au moins deux câbles de raccordement (28, 30) sont disposés en spirale, en cercle, en méandres, en zigzag, en étoile ou en forme de polygone dans l'élément d'isolation thermique (32).

11. Double capteur de température selon l'une des revendications précédentes, **caractérisé en ce qu'**un interrupteur manométrique est prévu dans une zone du bloc de capteurs (16) dirigée vers la surface de la peau.
